# EUROPÄISCHE PATENTANMELDUNG

(11) **EP 1 484 602 A2**
(43) Veröffentlichungstag der Anmeldung: **08.12.2004**
(21) Anmeldenummer: 04011119.7
(22) Anmeldetag: 11.05.2004
(51) Int. Cl.: G01N 23/20

(54) **Probenkammer mit Koppel- und Justiervorrichtung zum reproduzierbaren Ankoppeln der Probenkammer in ein Röntgendiffraktometer**

(30) Priorität: 16.05.2003 DE 10322040
(71) Anmelder: Forschungszentrum Karlsruhe GmbH, 76133 Karlsruhe (DE)
(72) Erfinder: Krepper, Volker, 76646 Bruchsal (DE); Herrmann, Günther, 76706 Dettenheim (DE); Bauer, Andreas Dr., 67434 Neustadt (DE); Weidler, Peter Dr., 76297 Stutensee (DE)

(57) **Zusammenfassung**

Koppel- und Justiervorrichtung für ein Röntgendiffraktometer, bestehend aus einer Probenkammer und einer Aufnahmevorrichtung zum reproduzierbaren Ankoppeln der Probenkammer an das Röntgendiffraktometer. Aufgabe der Erfindung ist es, eine Koppel- und Justiervorrichtung für ein Röntgendiffraktometer mit einer herausnehmbaren Probenkammer vorzuschlagen, welche außerhalb des Diffraktometers mit einer Probe bestückbar ist und mit der Probe präzise im Diffraktometer positionierbar ist. Die Aufgabe wird durch eine Koppel- und Justiereinrichtung mit einer Aufnahmevorrichtung, umfassend Mittel zum mittigen starren Ankoppeln und Mitteln zur vertikalen Feinjustierung gelöst, wobei die Mittel zum mittigen Ankoppeln ein Passelement, welches mit der Probenkammer verbunden ist, und ein Haltelement am Passelement umfassen und die Mittel zur vertikalen Feinjustierung eine Schlittenführung umfasst, wobei das Passelement mit der Schlittenführung starr verbindbar ist.

## Beschreibung

Die Erfindung betrifft eine Koppel- und Justiervorrichtung für ein Röntgendiffraktometer, bestehend aus einer Probenkammer und eine Aufnahmevorrichtung zum reproduzierbaren Ankoppeln der Probenkammer in das Röntgendiffraktometer, gemäß des ersten Patentanspruchs.

Röntgendiffraktometer dienen im Rahmen der Materialforschung, aber auch in artverwandten Wissenschaften der Ermittlung von Gitterparametern über die Netzebenenabstände kristallin geordneter Festkörper. Die Bestimmung ist allgemein als Röntgenstrukturuntersuchung bekannt, wobei eine ebene Oberfläche des zu untersuchenden Festkörpers mit einer weichen Röntgenstrahlung angestrahlt wird, diese an der Gitterstruktur des Festkörpers unter Bildung von Interferenzen gebeugt wird und die gebeugte Strahlung mit einem geeigneten Detektor (z.B. Szintillationszähler, Halbleiterdetektoren) quantitativ erfasst wird. Für die Berechung der Netzebenenabstände wird jedoch nur die gebeugte Strahlung bei dem Austrittswinkel zur Oberfläche berücksichtigt, der dem jeweiligen Eintrittswinkel der Strahlung auf die Oberfläche entspricht. Ein starkes Signal am Detektor bedeutet dann ein relativ hoher Anteil an gebeugter Strahlung für den entsprechenden Winkel und damit ein relativ häufiges Auftreten eines korrespondierenden Netzebenenabstandes. Kombinationen von Netzebenenabständen lassen Rückschlüsse auf die Gitterstruktur und damit auf die Zusammensetzung und die Morphologie des Stoffes zu.

In der Praxis werden in einem Diffraktometer Röntgenquelle und Detektor in einem vorgegebenen Winkelbereich zur Oberfläche exakt winkelsynchron zueinander bewegt und die am Detektor gemessenen Intensitäten an Strahlung über den Winkel aufgetragen. Die Winkelwerte müssen für die nachfolgende Berechnung der Netzebenenabstände exakt, d.h. mit mindestens zwei oder drei Stellen hinter dem Komma erfassbar sein, was eine entsprechend extrem exakte Positionierung der Festkörperoberfläche im Diffraktometer zwingend erforderlich macht.

Für Feinstrukturuntersuchungen an radioaktiven oder leicht oxidierbaren Substanzen oder unter einer abgeschirmten Atmosphäre sind im Diffraktometer separate klimatisierbare Probenkammern vorzusehen, in die eine zu untersuchende Probe eingesetzt wird. In der gängigen Praxis wird ein Probenhalter außerhalb des Diffraktometers mit einer Probe bestückt und im Diffraktometer in die geöffnete Probenkammer eingesetzt. Anschließend wird die Kammer verschlossen und beispielsweise durch Aufheizen, Abkühlung, Evakuieren und/oder Einleitung von Gasen klimatisiert.

[1] und [3] beschreiben verschiedene Bauformen derartiger im Diffratometer integrierte Kammern. Dabei sind die Röntgenstrahlungsgänge vollständig innerhalb der Probenkammer eingeschlossen [3] oder werden durch Fenster (vgl. [1, 2]) von außen in die Probenkammer geleitet. Geeignete Fenster sind im Falle von reinen Wärmekammern als Probenkammern einfache Wanddurchbrüche [2]. Ist dagegen eine andere Gaszusammensetzung oder ein anderer Druck in der Probenkammer einzustellen, müssen die Fenster mit einem für Röntgenstrahlung durchlässigen Material abzudecken oder zu verschließen [1].

Eine Probenkammer der eingangs genannten Art, welche als Einheit aus dem Diffraktometer zur externen Bestückung herausgenommen werden kann, ist dagegen nicht bekannt. Ebenso ist auch eine Koppel- und Justiervorrichtung für ein Röntgendiffraktometer, umfassend eine herausnehmbare Probenkammer nicht bekannt.

In [4] wird zwar eine Abdeckung für feuchtigkeitsempfindliche Proben auf dem Probenträger vorgeschlagen, welche aber allein aufgrund der konstruktiven Gestaltung weder für eine Temperierung noch für die Einleitung von Gasen oder für eine Evakuierung als geeignet erscheint.

Aufgabe der Erfindung ist es daher, eine Koppel- und Justiervorrichtung für ein Röntgendiffraktometer mit einer herausnehmbaren Probenkammer vorzuschlagen, welche extern, d.h. außerhalb des Diffraktometers mit einer Probe bestückbar ist und mit der Probe präzise im Diffraktometer positionierbar ist.

Die Aufgabe wird durch eine Koppel- und Justiervorrichtung mit den Merkmalen des ersten Patentanspruchs gelöst. Die Unteransprüche geben bevorzugte Ausgestaltungsmöglichkeiten dieser Koppel- und Justiervorrichtung wider.

Die Erfindung ist eine Koppel- und Justiervorrichtung für ein Röntgendiffraktometer, umfassend eine Probenkammer sowie eine Aufnahmevorrichtung zum reproduzierbaren Ankoppeln der Probenkammer an das Röntgendiffraktometer.

Wesentliche Merkmale der Koppel- und Justiervorrichtung betreffen die Aufnahmevorrichtung, welche Mittel zum mittigen starren Ankoppeln und Mitteln zur vertikalen Feinjustierung umfasst.

Die Mittel zum mittigen Ankoppeln umfassen im Wesentlichen ein Passelement, welches mit der Probenkammer verbunden ist, und ein Haltelement für das Passelement. Das Passelement und das Halteelement umfassen vorzugsweise eine Gleitpassung von mindestens einer Feder-Nut-Verbindung, einer Schwalbenschwanzführung, oder Passstiften auf denen die Probenkammer verdrehsicher und nur in einer Richtung, vorzugsweise senkrecht zu der in die Probenkammer einfallenden und aus dieser auch ausfallenden Röntgenstrahlung verschiebbar geführt ist. Sie umfassen Komponenten, die die Probenkammer an definierter Stelle auf dem Halteelement festhalten. Dies wird beispielsweise mit einem, die Gleitpassung überbrückenden herausnehmbaren Sicherungsbolzen, mit einem Anschlag und klemmender oder magnetischer Fixierung oder einer Einrastverbindung realisiert.

Die Mittel zur vertikalen Feinjustierung dienen der Positionierung der Probenkammer im Diffraktometer. Aufgrund der eingangs erläuterten hohen Genauigkeitserfordernisse bei Röntgenstrukturuntersuchungen sind Position und Ausrichtung der zu untersuchenden Probenoberfläche relativ zu Röntgenquelle und Detektor exakt einzuhalten. Folglich ist vor einer Messung die zu untersuchende Oberfläche der in der Probenkammer fest eingesetzten Probe exakt mit einer fiktiven, aber vorgegebenen Reflexions- bzw. Beugungsfläche in Übereinstimmung zu bringen. Bei der vorliegenden Erfindung bestehen die Mittel zur vertikalen Feinjustierung im Wesentlichen eine Schlittenführung, beispielsweise umfassend eine diffraktometerseitige Führungsbahn sowie einen auf dieser senkrecht (vertikal) zu der Reflexions- bzw. Beugungsebene geführten Schlitten. Auf dem Schlitten befindet sich ein Halteelement zum Aufschieben eines Probenkammerseitigen Passelements. Die Probe wird, vorzugsweise in einem für Diffraktometer üblichen herkömmlichen Probenträger eingesetzt, mit diesem in eine Probenträgeraufnahme in der Probenkammer eingeschoben, d. h. die zu untersuchende Oberfläche der Probe befindet sich in definierter Position und Ausrichtung in der Probenkammer. Über das Pass- und Halteelement befindet sich die Probenkammer und damit die Probe in vorgegebener Ausrichtung im Diffraktometer, womit auch die Planparallelität der zu untersuchenden Probenoberfläche zu einer vorgegebenen fiktiven Reflexions- bzw. Beugungsfläche sichergestellt ist.

Die Probe wird mit der vorgenannten Probenaufnahme durch die Probenkammer vollständig umschlossen, welche zum Einsetzen der Probe eine verschließbare Beschickungsöffnung aufweist. Die Probenkammer erhält damit die Funktion einer Barriere, welche einen Klimazustand in der Probenkammer von einem Umgebungsklima außerhalb der Probenkammer abschirmt. Die Probenkammer weist allerdings mindestens ein für die im Diffraktometer verwendete Röntgenstrahlung durchlässiges Fenster auf. Meist sind zwei kleinere Fenster erforderlich, wobei je eines für den von der Röntgenquelle in Richtung der Probe einfallenden Strahl sowie für den von der Probe gebeugten zum Detektor aus der Probenkammer ausfallenden Strahl vorzusehen ist.

Ist die Probenkammer für Versuche in anderer Gasatmosphäre oder unter Schutzgas gas- oder vakuumdicht zu gestalten, sind die Fenster durch eine für weiche Röntgenstrahlung durchlässige Kunststofffolie entsprechend abzudecken. Die bei Röntgenstrukturuntersuchungen verwendete weiche Röntgenstrahlung ist meist eine sog. Cu-Kα-Strahlung, welche gegenüber einer harten Röntgenstrahlung einerseits an der Netzebenenstruktur einer Probenoberfläche stärker und damit höher auflösend gebeugt werden, andererseits sich in Materialien gut absorbieren, d.h. es sind nur geringe Eindringtiefen in einem Material erzielbar. Dieser an sich positive Effekt bewirkt jedoch auch, dass die Kunststofffolie einen relativ hohen Einfluss auf die weiche Röntgenstrahlung nimmt, was wiederum durch eine möglichst dünne Folie aus vollständig amorphen Kunststoff ohne kristalline Anteile, welcher sich aus chemisch leichten Elementen zusammensetzt, minimieren lässt. Als eine geeignete Kunststofffolie, welche sich zudem durch eine gute Beständigkeit gegenüber radioaktiver Strahlung auszeichnet, erwies sich eine Folie aus Kapton (Produkt der Firma DuPont).

Eine Cu-Kα-Strahlung setzt sich aus einem Kα₁-Strahlungsanteil (Wellenlänge λ=0,15406nm) und einem schwächeren Kα₂-Strahlungsanteil (Wellenlänge λ=0,15443nm) zusammen. Die beiden Wellenlängen rufen dicht beieinanderliegende Beugungsmaxima hervor, welche dann durch geeignete Rechnerprogramme bei einer Auswertung zur berücksichtigen sind. Ebenso sind mögliche Störungssignale durch die Probenkammer oder der Kunststofffolie, sofern sie nicht durch konstruktive Maßnahmen and der Probenkammer eliminierbar sind (z.B. durch Filter, Monochromatoren), ggf. durch entsprechende Korrekturprogramme zu berücksichtigen.

Für die Einleitung von Gasen, Flüssigkeiten oder Aerosolen in die Probenkammer oder zur Evakuierung der Probenkammer ist diese mit mindestens einem Anschluss zu versehen.

Eine derartige Koppel- und Justiervorrichtung ermöglicht in vorteilhafter Weise einen sicheren Umgang vor allem toxischer, radioaktiver oder leicht zur Reaktionen neigender Proben. Eine Probe ist an beliebiger Stelle außerhalb eines Diffraktometers in die Probenkammer einsetzbar und mit der verschlossenen Probenkammer in das Diffraktometer integrierbar, womit unerwünschte Kontaminationen der Probe durch die umgebende Atmosphäre oder auch umgekehrt vermeidbar werden.

Ferner eignet sich die Koppel- und Justiervorrichtung in idealer Weise für die Durchführung von Serienversuchen, bei denen eine größere Anzahl von Proben in einer bestimmten Atmosphäre zu untersuchen sind und die verfügbare Messzeit am Diffraktometer begrenzt ist. Die Rüstzeit im Diffraktometer verkürzt sich drastisch, wenn die Probenkammern außerhalb mit Proben bestückt werden. Sie lässt sich mit der Verwendung exakt baugleicher Probenkammern weiter reduzieren, da nach einmaliger Justage mit den Mitteln zur vertikalen Feinjustage eine erneute Justage nach einem Wechsel der Probenkammer, d. h. der Probe nicht erforderlich ist.

Bei radioaktiven Proben bietet es sich an, die Probenkammer mit einer Beschickungsöffnung in bei der Abfallbehandlung von radioaktiven Stoffen üblichen Doppeldeckelbauweise (beschrieben z.B. in [5]) auszustatten, welche ein wiederholtes Einsetzen einer Probe in die Probenkammer beispielsweise in einer Handschuhbox ermöglicht, ohne diese von außen radioaktiv zu kontaminieren.

Die Anschlüsse an die Probenkammer sind durch Schnellkupplungssysteme im Diffraktometer mit den Schläuchen einer Pumpe oder einer Gasquelle anschließbar.

Die Erfindung wird im Folgenden anhand von Figuren, die eine mögliche Ausführungsform zeigen näher erläutert. Es zeigen
Fig. 1 eine perspektivische Darstellung der Koppel- und Justiervorrichtung, sowie
Fig. 2 a und b jeweils eine detaillierte Explosionsdarstellung der Probenkammer (a) und der Aufnahmevorrichtung (b) der Koppel- und Justiervorrichtung.

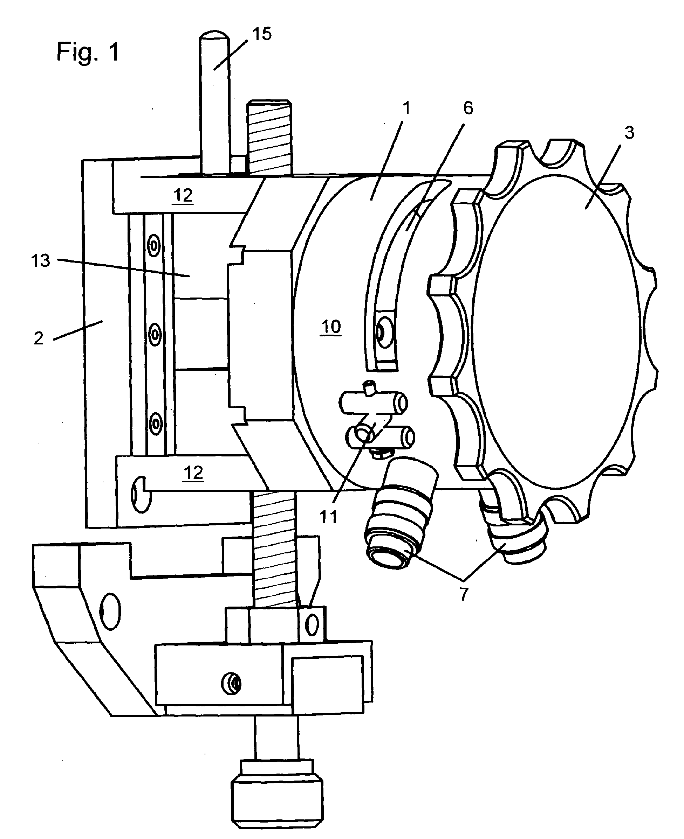

Die Koppel- und Justiervorrichtung in der beschriebenen Ausführungsform besteht, wie in Fig. 1 dargestellt, aus einer Probenkammer 1 sowie einer Aufnahmevorrichtung 2 zum reproduzierbaren Ankoppeln der Probenkammer an ein nicht weiter dargestelltes Röntgendiffraktometer.

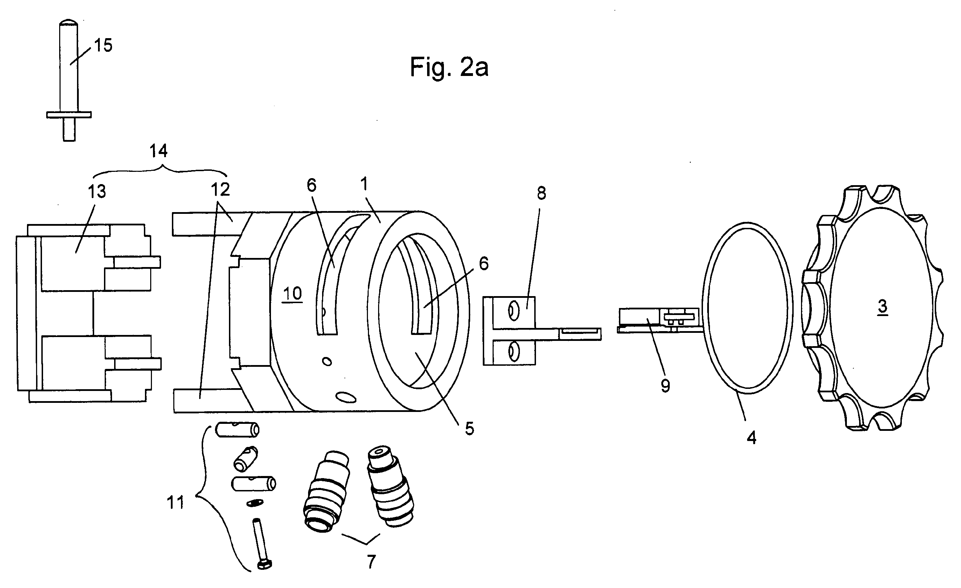

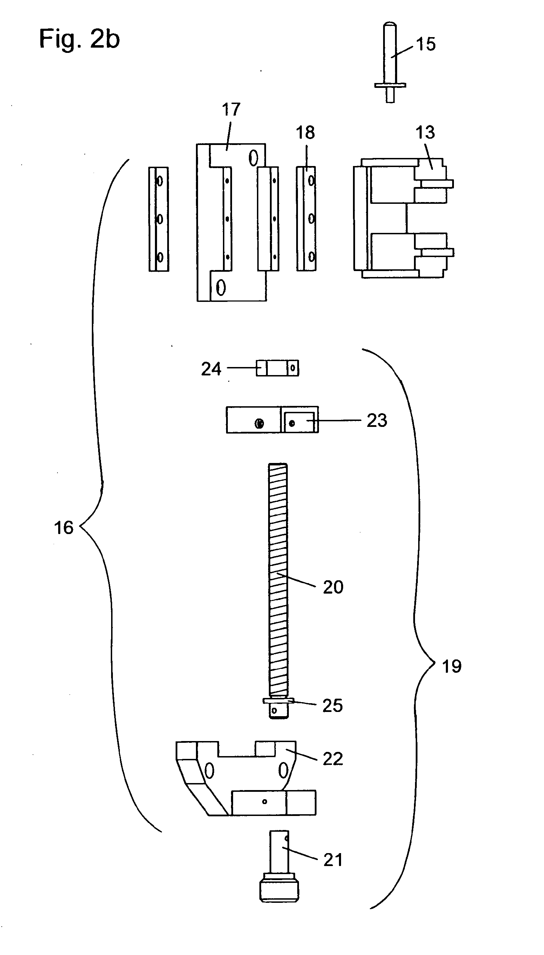

Die Probenkammer, dargestellt auch in der Explosionszeichnung gem. Fig. 2 a, umfasst einen Gewindedeckel 3 mit Dichtungsring 4 (O-Ring) als gas- und vakuumdichter Verschluss für die Beschickungsöffnung 5, zwei Fenster 6 als Durchlass für Röntgenstrahlung, zwei eingeschraubte Gasanschlüsse 7 sowie eine in der Probenkammer fixierte und exakt einjustierte Probenträgeraufnahme 8 für die Aufnahme eines Probenträgers 9. Ferner weist die Probenkammer eine zylindrische Außenfläche 10 auf, welche sich um die Fenster 6 erstreckt, und als Aufspannfläche für eine nicht dargestellte Kapton-Folie dient. Zur Befestigung der Kapton-Folie sind Spannelemente 11 vorgesehen, welche zusätzlich zur Eigenelastizität der Kapton-Folie eine auf die Fenster wirkende abdichtende Vorspannung dieser bewirken. Die abdichtende Wirkung kann, wenn erforderlich, zusätzlich mit Klebstoff oder Dichtpaste zwischen der Folie und der zylindrischen Außenfläche 10 unterstützt werden. Die Probenkammer ist mit einem Teil der Mittel zum mittigen starren Ankoppeln, bestehend aus zwei Stegen mit je einer Nut als Passelemente 12, versehen, wobei diese Nuten in ein Gegenstück in Form eines Federblocks als Haltelement 13 verdrehsicher und in einer Richtung aufschiebbar ist. Passelement 12 und Halteelement 13 bilden gemeinsam eine Feder-Nut-Verbindung 14 mit einer Gleitpassung, welche mit einem Sicherungsbolzen 15 in einer vorgegebenen Position, d.h. wenn die Probenkammer im Diffraktometer an gewünschter Position eingeschoben ist, arretierbar ist. Die dargestellte Arretierung mit Sicherungsbolzen ist mit besonders geringen, auf die Koppel- und Justiervorrichtung wirkenden Kräften betätigbar, was die Gefahr einer Verstellung einer erfolgten Justierung durch einen Probenkammerwechsel in besonders vorteilhafter Weise reduziert.

Die Aufnahmevorrichtung, auch dargestellt in der Explosionszeichnung gem. Fig. 2 b, umfasst Mittel zum mittigen starren Ankoppeln, d. h. das vorgenannte Haltelement 13 der Feder-Nut-Verbindung, sowie Mittel zur vertikalen Feinjustierung 16 der Probenkammer. Die Mittel zur vertikalen Feinjustierung umfassen eine Schlittenführung 17, einen Schlitten 18 sowie einen manuellen Spindelantrieb 19. Der Spindelantrieb der Ausführungsform besteht aus einer Spindel 20 (mit Drehknopf 21 und Bund 25), welche einerseits in ein Gewinde im Halteelement 13 eingreift (vgl. Fig. 1), andererseits sich über den Bund 25 gegen einen abgewinkelten Flansch 22 abstützt sowie mittels einer konternden Feststellmutter 24, welche einen Lagerbock 23 gegen den Bund 25 drückt, fixierbar ist. Das Haltelement 13 ist fest mit dem Schlitten 18 verbunden und über diesen auf der Schlittenführung 17, beispielweise ein lineares Wälzlager, vertikal bewegbar. In den Passelementen 12 sind hierbei entsprechende Aussparungen für die Gewindespindel vorzusehen.

Grundsätzlich sind Rahmen der beschriebenen Ausführungsform auch andere Mittel zur vertikalen Feinjustierung denkbar.

Schlittenführung 17 und Flansch 22 sind mit dem Diffraktometer fest verbunden und bilden somit die Halterung der gesamten Koppel- und Justiervorrichtung im Diffraktometer.

### Literatur

[1] DE 197 44 502 C2
[2] Bruker-AXS: HTC-Reflectometry, X-Ray Reflectometry at high Temperatures (Internet über www.bruker-axs.de, Stand 04. 04. 2003)
[3] DE 199 62 198 A1
[4] US 5.390.230
[5] DE 25 40 722 C2

### Bezugszeichenliste

- 1: Probenkammer
- 2: Aufnahmevorrichtung
- 3: Gewindedeckel
- 4: Dichtungsring
- 5: Beschickungsöffnung
- 6: Fenster
- 7: Gasanschluss
- 8: Probenträgeraufnahme
- 9: Probenträger
- 10: zylindrische Außenfläche
- 11: Spannelement
- 12: Steg mit Nut, Passelement
- 13: Federblock, Halteelement
- 14: Feder-Nut-Verbindung
- 15: Sicherungsbolzen
- 16: Mittel zur vertikalen Feinjustierung
- 17: Schlittenführung
- 18: Schlitten
- 19: manueller Spindelantrieb
- 20: Spindel
- 21: Drehknopf
- 22: abgewinkelten Flansch
- 23: Lagerblock
- 24: Feststellmutter
- 25: Bund

## Patentansprüche

1. Koppel- und Justiervorrichtung für ein Röntgendiffraktometer, bestehend aus einer Probenkammer und einer Aufnahmevorrichtung zum reproduzierbaren Ankoppeln der Probenkammer an das Röntgendiffraktometer,
**dadurch gekennzeichnet, dass**
die Aufnahmevorrichtung Mittel zum mittigen starren Ankoppeln und Mitteln zur vertikalen Feinjustierung umfasst, wobei die Mittel zum mittigen Ankoppeln ein Passelement, welches mit der Probenkammer verbunden ist, und ein Haltelement am Passelement umfassen und die Mittel zur vertikalen Feinjustierung eine Schlittenführung umfasst, wobei das Passelement mit der Schlittenführung starr verbindbar ist.

2. Koppel- und Justiervorrichtung nach Anspruch 1, **dadurch gekennzeichnet, dass** in der Probenkammer eine Probenaufnahme starr eingesetzt ist.

3. Koppel- und Justiervorrichtung nach Anspruch 2, **dadurch gekennzeichnet, dass** die Probenaufnahme von der Probenkammer vollständig umschlossen ist und mindestens ein für Röntgenstrahlung durchlässiges Fenster aufweist.

4. Koppel- und Justiervorrichtung nach Anspruch 3, **dadurch gekennzeichnet, dass** das Fenster durch eine für Röntgenstrahlung durchlässige Kunststofffolie abgedeckt ist.

5. Koppel- und Justiervorrichtung nach Anspruch 4, **dadurch gekennzeichnet, dass** die Kunststofffolie aus Kapton besteht.

6. Koppel- und Justiervorrichtung nach einem der vorangegangenen Ansprüche, **dadurch gekennzeichnet, dass** die Probenkammer eine Barriere darstellt, welche einen Klimazustand in der Probenkammer von einem Umgebungsklima außerhalb der Probenkammer abschirmt.

7. Koppel- und Justiervorrichtung nach Anspruch 6, **dadurch gekennzeichnet, dass** die Barriere druck- und gasdicht ist.

8. Koppel- und Justiervorrichtung nach einem der vorangegangenen Ansprüche, **dadurch gekennzeichnet, dass** die Probenkammer mindestens einen Gasanschluss für die Zuoder Ableitung von Gas in oder aus der Probenkammer aufweist.

9. Koppel- und Justiervorrichtung nach einem der vorangegangenen Ansprüche, **dadurch gekennzeichnet, dass** das Passelement mindestens eine Feder-Nut-Verbindung oder eine Schwalbenschwanzführung sowie einen Haltebolzen umfassen und die vertikale Feinjustierung einen manuellen oder motorischen Spindelantrieb umfassen.

10. Koppel- und Justiervorrichtung nach einem der vorangegangenen Ansprüche, **dadurch gekennzeichnet, dass** die Probenkammer eine Beschickungsöffnung in einer Doppeldeckelbauweise aufweist.
